# EUROPEAN PATENT SPECIFICATION

(11) **EP 4 420 481 B1**
(45) Date of publication and mention of the grant of the patent: **10.06.2026**
(21) Application number: 22882707.7
(22) Date of filing: 12.10.2022
(51) Int. Cl.: H04W 88/06, H04W 4/40, H04W 48/18, H04W 4/44, H04W 4/46, H04W 8/18, H04W 48/12, H04W 92/18, H04W 76/14, H04W 76/18

(54) **PERFORMING A TRANSMISSION OF A FIRST SUBSCRIPTION USING INFORMATION OF A SECOND SUBSCRIPTION**
DURCHFÜHRUNG EINER ÜBERTRAGUNG EINES ERSTEN ABONNEMENTS UNTER VERWENDUNG VON INFORMATIONEN EINES ZWEITEN ABONNEMENTS
RÉALISATION D'UNE TRANSMISSION D'UN PREMIER ABONNEMENT À L'AIDE D'INFORMATIONS D'UN SECOND ABONNEMENT

(30) Priority: 22.10.2021 WO PCT/CN2021/125523
(43) Date of publication of application: 28.08.2024
(73) Proprietor: QUALCOMM INCORPORATED, San Diego, California 92121-1714 (US)
(72) Inventor: LI, Chunxia, San Diego, California 92121-1714 (US); ZHANG, Matthew Heng, San Diego, California 92121-1714 (US); YAN, Yuyu, San Diego, California 92121-1714 (US); XU, Hua, San Diego, California 92121-1714 (US); ZHU, Liang, San Diego, California 92121-1714 (US); CHEN, Feng, San Diego, California 92121-1714 (US)
(74) Representative: Jaeger, Michael David
(86) International application number: PCT/CN2022/124753
(87) International publication number: WO 2023/066097

(56) References cited:
- EP-A1- 3 547 778
- WO-A1-2018/053312
- WO-A1-2018/053312
- WO-A1-2021/016909
- US-A1- 2018 063 880
- US-A1- 2018 070 303
- US-A1- 2021 014 672
- US-B1- 10 623 946

## Description

### CROSS-REFERENCE TO RELATED APPLICATION

This Patent Application claims priority to International Patent Application No. PCT/CN2021/125523, filed on October 22, 2021, entitled "PERFORMING A TRANSMISSION OF A FIRST SUBSCRIPTION USING INFORMATION OF A SECOND SUBSCRIPTION," and assigned to the assignee hereof.

### FIELD OF THE DISCLOSURE

Aspects of the present disclosure generally relate to wireless communication and to techniques and apparatuses for performing a transmission of a first subscription using information of a second subscription.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful. Document EP3547778A1 discloses a method, wherein if the UE does not receive an SIB (e.g., SIB21) including V2X communication information (i.e., resource pool information) from an eNB, it may use pre-configured resource pool information for use by the "out-of-coverage UE" case. Document WO2018/053312A1 discloses a method, wherein when it is detected that a first subscription experiences a RLF/OOS in connected mode, then the first subscription is put into idle mode to avoid resource conflicts with the second subscription.

### SUMMARY

In some implementations, an apparatus for wireless communication at a first device includes a memory and one or more processors, coupled to the memory, configured to: detect that a vehicle-to-everything (V2X) system information block (SIB) or reconfiguration information is unavailable based at least in part on a first subscription of the first device satisfying a condition; determine the V2X SIB or reconfiguration information associated with the first subscription based at least in part on V2X SIB or reconfiguration information associated with a second subscription of the first device; and perform, to one or more of a network node or a second device and using the first subscription, a V2X transmission using the V2X SIB or reconfiguration information associated with the second subscription.

In some implementations, a method of wireless communication performed by a first device includes detecting that a V2X SIB or reconfiguration information is unavailable based at least in part on a first subscription of the first device satisfying a condition; determining the V2X SIB or reconfiguration information associated with the first subscription based at least in part on V2X SIB or reconfiguration information associated with a second subscription of the first device; and performing, to one or more of a network node or a second device and using the first subscription, a V2X transmission using the V2X SIB or reconfiguration information associated with the second subscription.

In some implementations, a non-transitory computer-readable medium storing a set of instructions for wireless communication includes one or more instructions that, when executed by one or more processors of a first device, cause the first device to: detect that a V2X SIB or reconfiguration information is unavailable based at least in part on a first subscription of the first device satisfying a condition; determine the V2X SIB or reconfiguration information associated with the first subscription based at least in part on V2X SIB or reconfiguration information associated with a second subscription of the first device; and perform, to one or more of a network node or a second device and using the first subscription, a V2X transmission using the V2X SIB or reconfiguration information associated with the second subscription.

In some implementations, a first apparatus for wireless communication includes means for detecting that a V2X SIB or reconfiguration information is unavailable based at least in part on a first subscription of the first apparatus satisfying a condition; means for determining the V2X SIB or reconfiguration information associated with the first subscription based at least in part on V2X SIB or reconfiguration information associated with a second subscription of the first apparatus; and means for performing, to one or more of a network node or a second apparatus and using the first subscription, a V2X transmission using the V2X SIB or reconfiguration information associated with the second subscription.

Aspects generally include a method, apparatus, system, computer program product, non-transitory computer-readable medium, user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Figs. 3-4 are diagrams illustrating examples of vehicles with a multiple subscriber identification module (SIM) mode in a wireless communication network, in accordance with the present disclosure.
Figs. 5-7 are diagrams illustrating examples associated with performing a transmission of a first subscription using information of a second subscription, in accordance with the present disclosure.
Fig. 8 is a diagram illustrating an example process associated with performing a transmission of a first subscription using information of a second subscription, in accordance with the present disclosure.
Fig. 9 is a diagram of an example apparatus for wireless communication, in accordance with the present disclosure.
Fig. 10 is a diagram illustrating an example of a disaggregated base station architecture, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

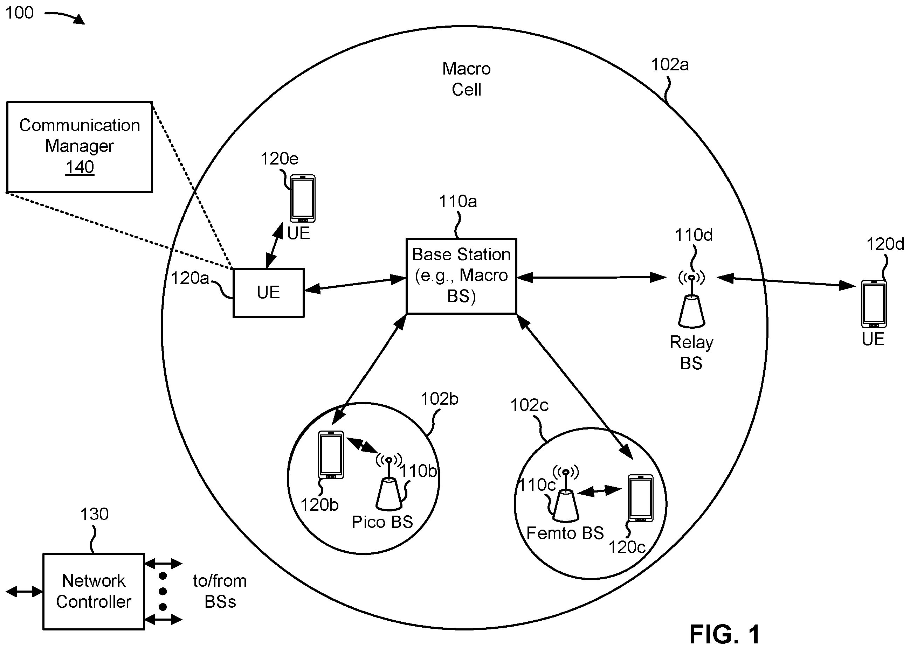

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some aspects, the terms "base station" (e.g., the base station 110) or "network node" may refer to an aggregated base station, a disaggregated base station, an integrated access and backhaul (IAB) node, a relay node, and/or one or more components thereof. For example, in some aspects, "base station" or "network node" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the terms "base station" or "network node" may refer to one device configured to perform one or more functions, such as those described herein in connection with the base station 110. In some aspects, the terms "base station" or "network node" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the terms "base station" or "network node" may refer to any one or more of those different devices. In some aspects, the terms "base station" or "network node" may refer to one or more virtual base stations and/or one or more virtual base station functions. For example, in some aspects, two or more base station functions may be instantiated on a single device. In some aspects, the terms "base station" or "network node" may refer to one of the base station functions and not another. In this way, a single device may include more than one base station.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, a first device (e.g., UE 120a) may include a communication manager 140. As described in more detail elsewhere herein, the communication manager 140 may detect that a V2X system information block (SIB) or reconfiguration information is unavailable based at least in part on a first subscription of the first device satisfying a condition; determine the V2X SIB or reconfiguration information associated with the first subscription based at least in part on V2X SIB or reconfiguration information associated with a second subscription of the first device; and perform, to one or more of a network node or a second device and using the first subscription, a V2X transmission using the V2X SIB or reconfiguration information associated with the second subscription. Additionally, or alternatively, the communication manager 140 may perform one or more other operations described herein.

As indicated above, Fig. 1 is provided as an example. Other examples may differ from what is described with regard to Fig. 1.

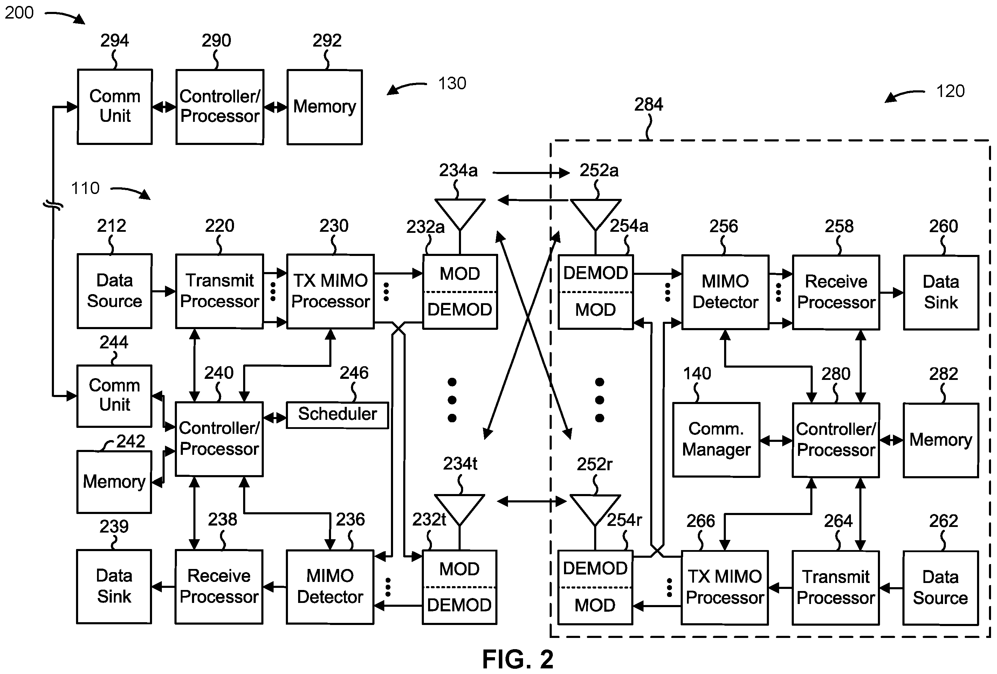

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

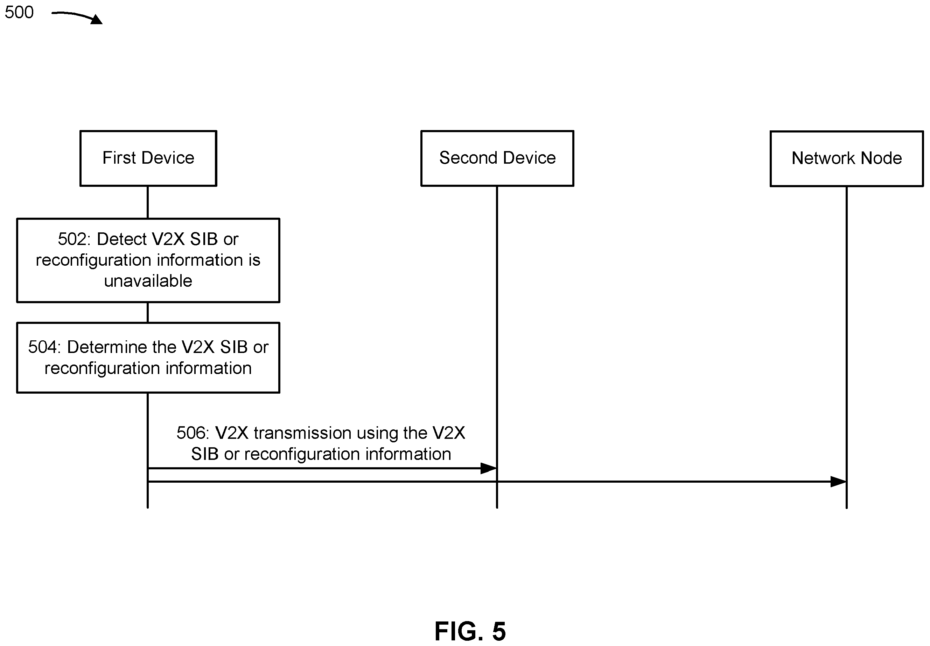

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 5-9).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 5-9).

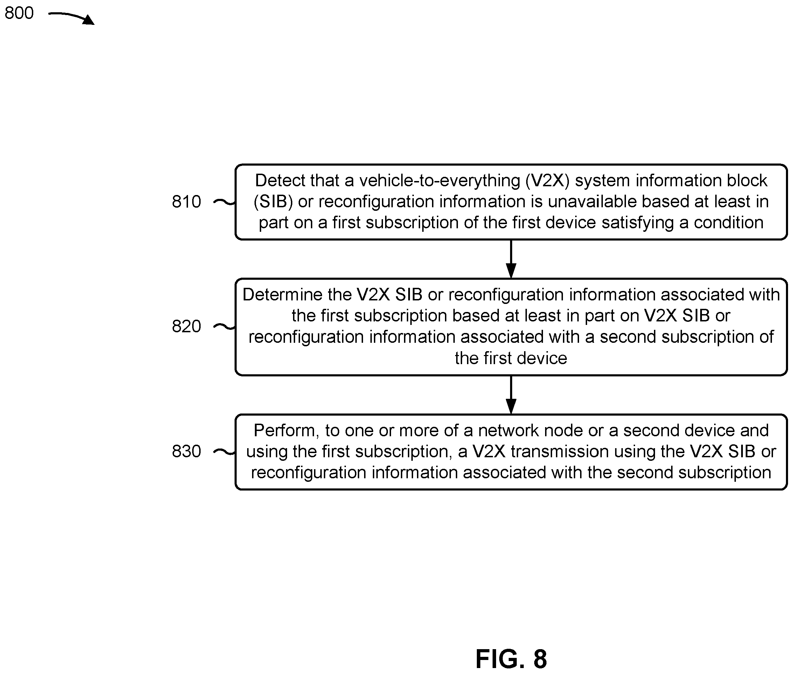

The controller/processor 240 of the base station 110, the controller/processor 280 of the UE 120, and/or any other component(s) of Fig. 2 may perform one or more techniques associated with performing a transmission of a first subscription using information of a second subscription, as described in more detail elsewhere herein. For example, the controller/processor 240 of the base station 110, the controller/processor 280 of the UE 120, and/or any other component(s) of Fig. 2 may perform or direct operations of, for example, process 800 of Fig. 8, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 800 of Fig. 8, and/or other processes as described herein. In some examples, executing instructions may include running the instructions, converting the instructions, compiling the instructions, and/or interpreting the instructions, among other examples.

In some aspects, a first device (e.g., UE 120a) includes means for detecting that a V2X SIB or reconfiguration information is unavailable based at least in part on a first subscription of the first device satisfying a condition; means for determining the V2X SIB or reconfiguration information associated with the first subscription based at least in part on V2X SIB or reconfiguration information associated with a second subscription of the first device; and/or means for performing, to one or more of a network node or a second device and using the first subscription, a V2X transmission using the V2X SIB or reconfiguration information associated with the second subscription. In some aspects, the means for the first device to perform operations described herein may include, for example, one or more of communication manager 140, antenna 252, modem 254, MIMO detector 256, receive processor 258, transmit processor 264, TX MIMO processor 266, controller/processor 280, or memory 282.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

A device (e.g., a vehicle) may support a multi subscriber identification module (SIM) mode, such as a dual SIM dual-active mode or a dual SIM dual-standby mode. The device may include two SIM cards that have the capability to operate in two separate networks. The two SIM cards may both be active at a given time, or the two SIM cards may both be on standby at a given time. The two SIM cards may be associated with two separate subscriptions. For example, each SIM card may store network-specific information used to authenticate and identify subscribers on a specific network. A first SIM card may be associated with a first subscription, and a second SIM card may be associated with a second subscription. The first subscription may be associated with a first network operator, and the second subscription may be associated with a second network operator. The device may have one or more radio frequency (RF) chains that allow for dual uplink connections, such that the two separate subscriptions may support uplink at a same time. In other words, the device may support "full concurrency," since the one or more RF chains may concurrently support the two separate subscriptions at the same time.

The device may include a first RF chain associated with the first subscription. The first RF chain may perform uplink transmissions to a first network node (e.g., a first base station). The device may include a second RF chain associated with the second subscription. The second RF chain may perform uplink transmissions to a second network node (e.g., a second base station). Alternatively, the device may include a single RF chain associated with both the first subscription and the second subscription based on a time division scheme of the single RF chain between the first subscription and the second subscription. The first network node may be associated with a first network, and the second network node may be associated with a second network. In some cases, the first network node and the second network node may be a same network node in a same network.

The device having the multi-SIM mode capability may support concurrent modem activities when the device is registered with services on both subscriptions. The device may be registered with a first service associated with a first RAT. The device may be associated with the first RAT using the first subscription. The first RAT may be a Global System for Mobile Communications (GSM) RAT, a wideband code division multiple access (WCDMA) RAT, a time division synchronous code division multiple access (TD-SCDMA) RAT, an NR RAT, or an LTE RAT. The device may be registered with a second service associated with a second RAT. The device may be associated with the second RAT using the second subscription. The second RAT may be an NR RAT or an LTE RAT. The first subscription may be a high capability subscription and the second subscription may be a common capability subscription, where the high capability subscription may be associated with a higher priority as compared to the common capability subscription. For example, the high capability subscription may be associated with a voice call, and the common capability subscription may be associated with data transfer.

The device may support the multi-SIM mode, where a first mode may be associated with GSM, WCDMA, TD-SCDMA, NR, or LTE, and a second mode may be associated with NR or LTE. The device may support the multi-SIM mode based at least in part on two subscriptions, where a first subscription may be a high capability subscription and a second subscription may be a common capability subscription. Further, the device may be configured to perform V2X communications. The V2X communications may be associated with the first subscription, which may correspond to the high capability subscription.

In a first case, the V2X communications may be affected when the first subscription is associated with (or camps on) a GSM/WCDMA/TD-SCDMA RAT, such that no V2X system information block 21 (SIB21) and system information block 26 (SIB26) (in an idle mode) or a reconfiguration information (in a connected mode) may be received from a network. In a second case, the V2X communications may be affected when the first subscription is associated with (or camps on) an NR/LTE RAT, but an out-of-service (OOS) or a radio link failure (RLF) or no V2X SIB may occur on the first subscription, thereby affecting the V2X communications.

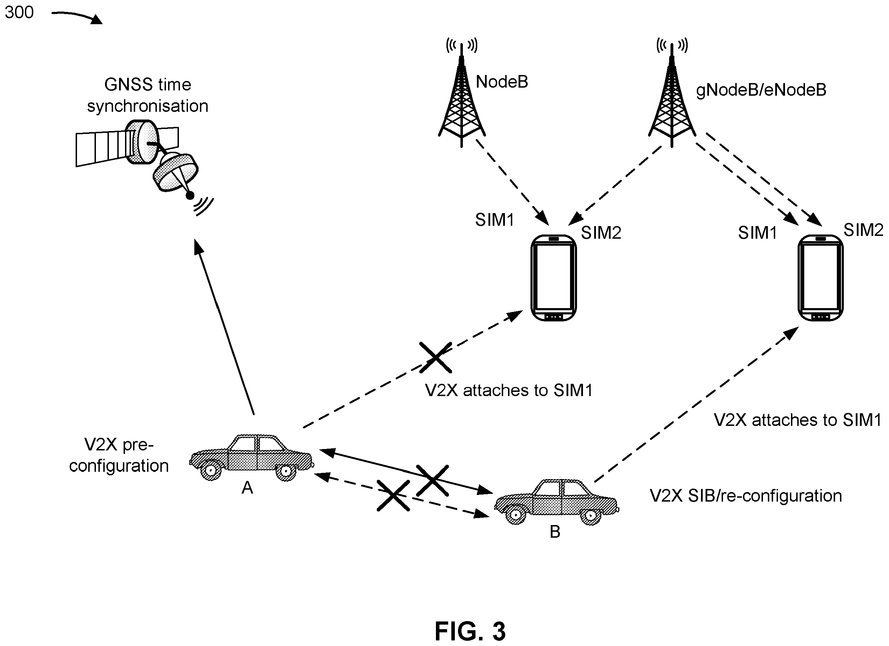

Fig. 3 is a diagram illustrating an example 300 of vehicles with a multi-SIM mode in a wireless communication network, in accordance with the present disclosure.

As shown in Fig. 3, a first vehicle (Vehicle A) may include a first SIM (e.g., a default SIM) and a second SIM, where the first SIM may be associated with a first subscription of the first vehicle (e.g., a high capability subscription) and the second SIM may be associated with a second subscription of the first vehicle (e.g., a common capability subscription). V2X communications of the first vehicle may be attached to the first SIM associated with the first subscription of the first vehicle. The first subscription of the first vehicle may be associated with a first network node (e.g., NodeB), where the first network node may be associated with a GSM/WCDMA/TD-SCDMA RAT. The second subscription of the first vehicle may be associated with a second network node (e.g., gNodeB or eNodeB), where the second network node may be associated with an NR/LTE RAT. Further, the first vehicle may perform a global navigation satellite system (GNSS) time synchronization.

A second vehicle (Vehicle B) may include a first SIM (e.g., a default SIM) and a second SIM, where the first SIM may be associated with a first subscription of the second vehicle (e.g., a high capability subscription) and the second SIM may be associated with a second subscription of the second vehicle (e.g., a common capability subscription). V2X communications of the first vehicle may be attached to the first SIM associated with the first subscription of the second vehicle. For the second vehicle, both the first subscription of the second vehicle and the second subscription of the second vehicle may be associated with the second network node (e.g., gNodeB or eNodeB).

When the first vehicle is associated with the first network node via the first subscription of the first vehicle (e.g., the high capability subscription camps on the GSM/WCDMA/TD-SCDMA RAT), the first vehicle may be unable to receive a V2X SIB21 and SIB26 in an idle mode or reconfiguration information. The first vehicle may be unable to receive the V2X SIB21 and SIB26 in the idle mode or reconfiguration information since the first subscription of the first vehicle is associated with the first network node and not the second network node. Since the first vehicle cannot receive the V2X SIB21 and SIB26 in the idle mode or reconfiguration information, the first vehicle may be unable to determine sidelink resource pools associated with the V2X SIB21 and SIB26 in the idle mode or reconfiguration information. As a result, the first vehicle may be unable to perform communications with the second vehicle, where the communications may be PC5 communications or SIB/reconfiguration communications. In some cases, the first vehicle may be configured with a V2X pre-configuration, which may indicate PC5 defined pre-configuration sidelink resource pools, which may allow the first vehicle to communicate with other entities.

The second vehicle may be associated with the second network node. In this case, both the first subscription of the second vehicle and the second subscription of the second vehicle may be associated with the second network node. The second vehicle may use resources associated with sidelink resource pools, as indicated in a V2X SIB or reconfiguration information, to communicate with other entities.

As indicated above, Fig. 3 is provided as an example. Other examples may differ from what is described with regard to Fig. 3.

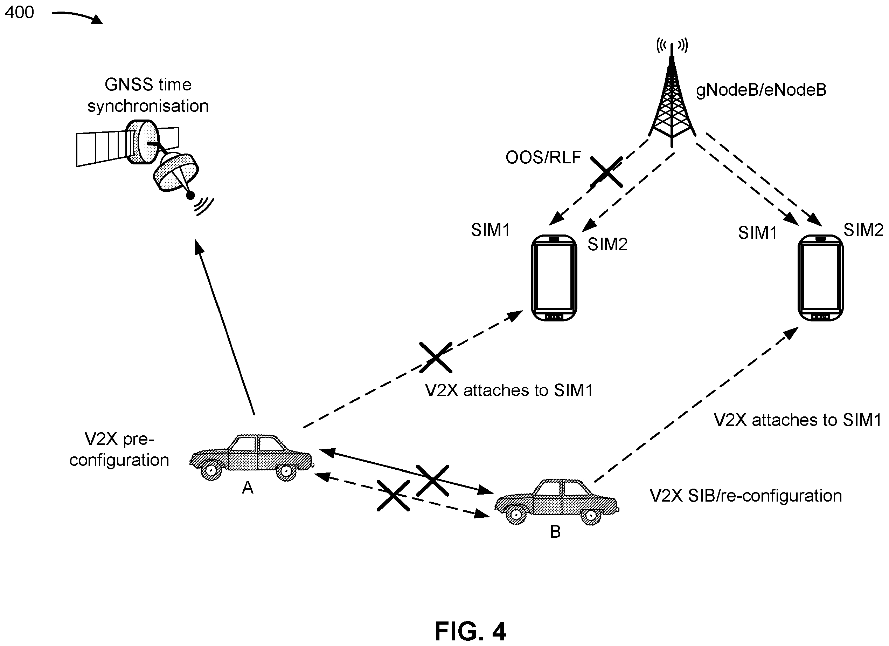

Fig. 4 is a diagram illustrating an example 400 of vehicles with a multi-SIM mode in a wireless communication network, in accordance with the present disclosure.

As shown in Fig. 4, a first vehicle (Vehicle A) may include a first SIM (e.g., a default SIM) and a second SIM, where the first SIM may be associated with a first subscription of the first vehicle (e.g., a high capability subscription) and the second SIM may be associated with a second subscription of the first vehicle (e.g., a common capability subscription). V2X communications of the first vehicle may be attached to the first SIM associated with the first subscription of the first vehicle. The first subscription of the first vehicle may be associated with a network node (e.g., gNodeB or eNodeB), where the first network node may be associated with an NR/LTE RAT. The second subscription of the first vehicle may also be associated with the network node. Further, the first vehicle may perform a GNSS time synchronization.

A second vehicle (Vehicle B) may include a first SIM (e.g., a default SIM) and a second SIM, where the first SIM may be associated with a first subscription of the second vehicle (e.g., a high capability subscription) and the second SIM may be associated with a second subscription of the second vehicle (e.g., a common capability subscription). V2X communications of the first vehicle may be attached to the first SIM associated with the first subscription of the second vehicle. For the second vehicle, both the first subscription of the second vehicle and the second subscription of the second vehicle may be associated with the network node (e.g., gNodeB or eNodeB).

When the first vehicle is associated with the network node via the first subscription of the first vehicle (e.g., the high capability subscription camps on the NR/LTE RAT), but an OOS or an RLF or no V2X SIB21 and SIB26 in an idle mode or reconfiguration occurred on the first subscription, the first vehicle may lose a V2X SIB21 and SIB26 in the idle mode or reconfiguration information. The first vehicle may lose the V2X SIB21 and SIB26 in the idle mode or reconfiguration information due to the OOS or the RLF, or due to the lack of V2X SIB21 and SIB26 in the idle mode or reconfiguration occurring on the first subscription. Since the first vehicle loses the V2X SIB21 and SIB26 in the idle mode or reconfiguration information, the first vehicle may be unable to determine sidelink resource pools associated with the V2X SIB21 and SIB26 in the idle mode or reconfiguration information. As a result, the first vehicle may be unable to perform communications with the second vehicle, where the communications may be PC5 communications or SIB/reconfiguration communications. In some cases, the first vehicle may be configured with a V2X pre-configuration, which may indicate PC5 defined pre-configuration sidelink resource pools, which may allow the first vehicle to communicate with other entities.

The second vehicle may be associated with the network node. In this case, both the first subscription of the second vehicle and the second subscription of the second vehicle may be associated with the second network node (e.g., the high capability subscription camps on the NR/LTE RAT). The second vehicle may use resources associated with sidelink resource pools, as indicated in a V2X SIB or reconfiguration information, to communicate with other entities.

As indicated above, Fig. 4 is provided as an example. Other examples may differ from what is described with regard to Fig. 4.

A device (e.g., a vehicle) device supporting a multi-SIM mode may include a first subscription and a second subscription. The device may be configured to perform V2X communications. The V2X communications may be associated with the first subscription. However, in various scenarios, an ability of the device to perform V2X communications may be affected. For example, in a first scenario, the V2X communications may be affected when the first subscription is associated with (or camps on) a GSM/WCDMA/TD-SCDMA RAT, such that no V2X SIB21 and SIB26 in an idle mode or a reconfiguration information (in a connected mode) may be received from a network. In a second scenario, the V2X communications may be affected when the first subscription is associated with (or camps on) an NR/LTE RAT, but an OOS or an RLF or no V2X SIB may occur on the first subscription, thereby affecting the V2X communications. In these scenarios, the device may be unable to perform V2X communications.

In various aspects of techniques and apparatuses described herein, a first device may detect that a V2X SIB or reconfiguration information is unavailable based at least in part on a first subscription of the first device satisfying a condition. The first subscription associated with the first device may satisfy the condition based at least in part on the first subscription being associated with a GSM RAT, a WCDMA RAT, or a TD-SCDMA RAT. The first subscription associated with the first device may satisfy the condition based at least in part on the first subscription being associated with an LTE RAT or an NR RAT, and based at least in part on an OOS or an RLF associated with the first subscription. The second subscription may be associated with an LTE RAT or an NR RAT. The first device may determine the V2X SIB or reconfiguration information associated with the first subscription based at least in part on V2X SIB or reconfiguration information associated with a second subscription of the first device. The first device may perform, to a network node or a second device and using the first subscription, a V2X transmission using the V2X SIB or reconfiguration information associated with the second subscription. In other words, the V2X SIB or reconfiguration information associated with the second subscription may be shared with the first subscription, such that the first subscription uses the V2X SIB or reconfiguration information associated with the second subscription. As a result, V2X service communications of the first subscription may be continuous, even when the first subscription is associated with the GSM/WCDMA.TD-SCDMA RAT, or even when the first subscription is subjected to OOS/RLF.

Fig. 5 is a diagram illustrating an example 500 associated with performing a transmission of a first subscription using information of a second subscription, in accordance with the present disclosure. As shown in Fig. 5, example 500 includes communication between a first device (e.g., UE 120a), a second device (e.g., UE 120e), and a network node (e.g., base station 110). In some aspects, the first device, the second device, and the network node may be included in a wireless network, such as wireless network 100.

As shown by reference number 502, the first device may detect (e.g., using controller/processor 280, and/or memory 282) that a V2X SIB or reconfiguration information is unavailable based at least in part on a first subscription of the first device satisfying a condition. The V2X SIB may be a V2X SIB21 and SIB26 in an idle mode. In some aspects, the first subscription associated with the first device may satisfy the condition based at least in part on the first subscription being associated with a GSM RAT, a WCDMA RAT, or a TD-SCDMA RAT. In some aspects, the first subscription associated with the first device may satisfy the condition based at least in part on the first subscription being associated with an LTE RAT or an NR RAT, and based at least in part on an OOS or an RLF associated with the first subscription. The second subscription may be associated with an LTE RAT or an NR RAT.

As shown by reference number 504, the first device may determine (e.g., using controller/processor 280, and/or memory 282) the V2X SIB or reconfiguration information associated with the first subscription based at least in part on V2X SIB or reconfiguration information associated with a second subscription of the first device. In some aspects, the first subscription may be a high capability subscription and the second subscription may be a common capability subscription. In some aspects, the first device may be associated with a dual SIM mode, where a first SIM may be associated with the first subscription and the second SIM may be associated with the second subscription.

As shown by reference number 506, the first device may perform (e.g., using controller/processor 280, transmit processor 264, TX MIMO processor 266, modem 254, antenna 252, and/or memory 282), to one or more of the network node or the second device and using the first subscription, a V2X transmission using the V2X SIB or reconfiguration information associated with the second subscription. The V2X transmission may be associated with the first subscription, and the V2X transmission may not be associated with the second subscription. In other words, the V2X transmission may be attached to the first subscription, and the V2X transmission may not be attached to the second subscription.

In some aspects, the first device may perform the V2X transmission, using the first subscription, based at least in part on sidelink pool resources indicated in the V2X SIB or reconfiguration information associated with the second subscription. The V2X SIB or reconfiguration information associated with the second subscription may indicate the sidelink pool resources. Further, the V2X SIB (e.g., the V2X SIB21 and SIB26 in the idle mode) or reconfiguration information associated with the second subscription may be associated with a V2X sidelink communication configuration. The V2X SIB or reconfiguration information may indicate a V2X common reception pool associated with sidelink resources, a V2X common transmission pool associated with sidelink resources, an inter-frequency information list, a resource selection configuration, a zone configuration, an anchor carrier frequency list, carrier frequency information for V2X sidelink communications, and other information that the first device may use to perform the V2X transmission.

In some aspects, the first device may perform the V2X transmission using the V2X SIB or reconfiguration information associated with the second subscription, even though the V2X transmission may not be attached to the second subscription. The V2X transmission may be attached to the first subscription, but the OOS/RLF may occur on the first subscription. In this case, the second subscription may have the V2X SIB or reconfiguration information, and the first device may perform the V2X transmission to the second device or the network node using the V2X SIB or reconfiguration information on the second subscription. As a result, V2X service communication may be continuous for the first device. For example, when the first subscription is associated with the GSM RAT, the WCDMA RAT, or the TD-SCDMA RAT, or when the first subscription experiences the OOS/RLF, the first device may not need to wait until the first subscription is associated with the LTE RAT or the NR RAT or until the OOS/RLF has been resolved to perform V2X transmissions. V2X devices, such as the first device and the second device, within a wireless network area may continue communicating with each other.

As indicated above, Fig. 5 is provided as an example. Other examples may differ from what is described with regard to Fig. 5.

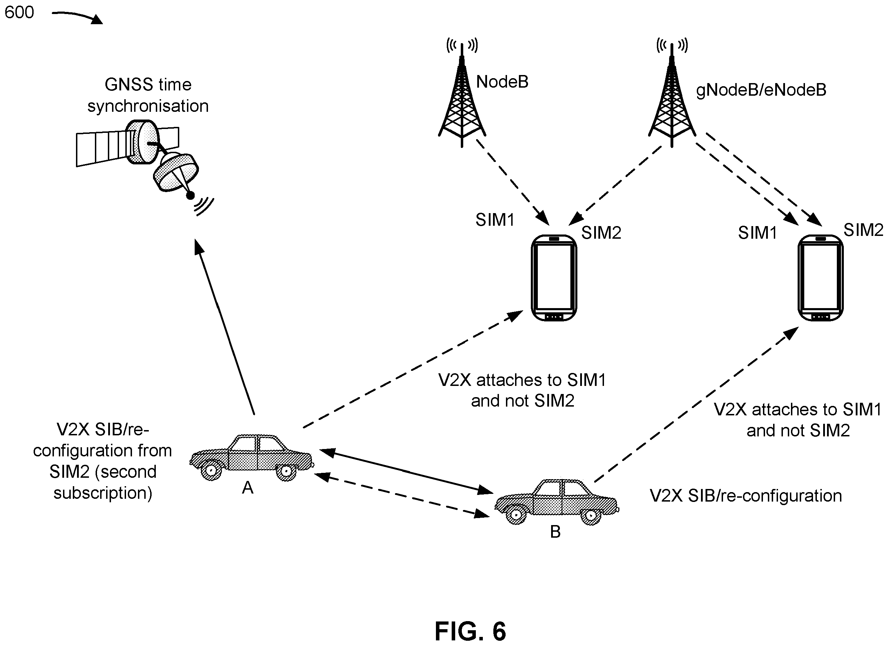

Fig. 6 is a diagram illustrating an example 600 associated with performing a transmission of a first subscription using information of a second subscription, in accordance with the present disclosure.

As shown in Fig. 6, a first vehicle (Vehicle A) may include a first SIM (e.g., a default SIM) and a second SIM, where the first SIM may be associated with a first subscription of the first vehicle (e.g., a high capability subscription) and the second SIM may be associated with a second subscription of the first vehicle (e.g., a common capability subscription). V2X communications of the first vehicle may be attached to the first SIM associated with the first subscription of the first vehicle. The first subscription of the first vehicle may be associated with a first network node (e.g., NodeB), where the first network node may be associated with a GSM/WCDMA/TD-SCDMA RAT. The second subscription of the first vehicle may be associated with a second network node (e.g., gNodeB or eNodeB), where the second network node may be associated with an NR/LTE RAT.

A second vehicle (Vehicle B) may include a first SIM (e.g., a default SIM) and a second SIM, where the first SIM may be associated with a first subscription of the second vehicle (e.g., a high capability subscription) and the second SIM may be associated with a second subscription of the second vehicle (e.g., a common capability subscription). V2X communications of the first vehicle may be attached to the first SIM associated with the first subscription of the second vehicle. For the second vehicle, both the first subscription of the second vehicle and the second subscription of the second vehicle may be associated with the second network node (e.g., gNodeB or eNodeB).

In some aspects, the first vehicle may be unable to receive a V2X SIB or reconfiguration information for the first subscription, since the first subscription may be associated with the GSM/WCDMA/TD-SCDMA RAT. In this case, the first vehicle may determine a V2X SIB or reconfiguration information for the second subscription. The first vehicle may assume that the V2X SIB or reconfiguration information for the first subscription corresponds to the V2X SIB or reconfiguration information for the second subscription. The first vehicle may perform a V2X transmission for the first subscription, to the second vehicle and/or the first network node, using the V2X SIB or reconfiguration information for the second subscription. The first vehicle may perform the V2X transmission using the V2X SIB or reconfiguration information for the second subscription, even though the V2X transmission is not attached to the second subscription. The V2X SIB or reconfiguration information for the second subscription may indicate sidelink resource pools and other information that enables the first vehicle to perform the V2X transmission for the first subscription. As a result, the first vehicle may perform the V2X transmission based at least in part on sidelink pool resource sharing between subscriptions when the first vehicle operates in a multi-SIM mode.

As indicated above, Fig. 6 is provided as an example. Other examples may differ from what is described with regard to Fig. 6.

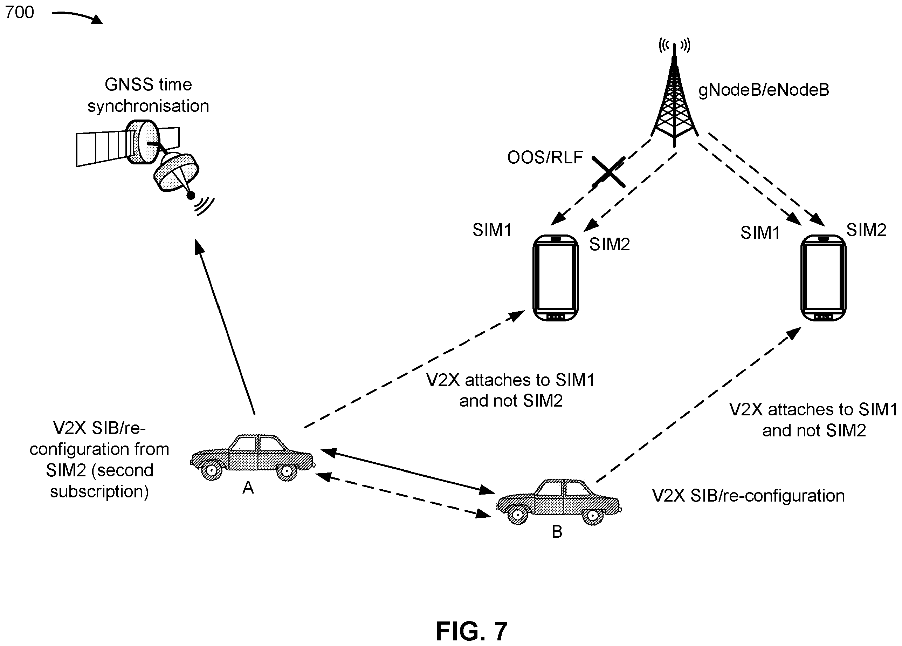

Fig. 7 is a diagram illustrating an example 700 associated with performing a transmission of a first subscription using information of a second subscription, in accordance with the present disclosure.

As shown in Fig. 7, a first vehicle (Vehicle A) may include a first SIM (e.g., a default SIM) and a second SIM, where the first SIM may be associated with a first subscription of the first vehicle (e.g., a high capability subscription) and the second SIM may be associated with a second subscription of the first vehicle (e.g., a common capability subscription). V2X communications of the first vehicle may be attached to the first SIM associated with the first subscription of the first vehicle. The first subscription of the first vehicle may be associated with a network node (e.g., gNodeB or eNodeB), where the first network node may be associated with an NR/LTE RAT.

A second vehicle (Vehicle B) may include a first SIM (e.g., a default SIM) and a second SIM, where the first SIM may be associated with a first subscription of the second vehicle (e.g., a high capability subscription) and the second SIM may be associated with a second subscription of the second vehicle (e.g., a common capability subscription). V2X communications of the first vehicle may be attached to the first SIM associated with the first subscription of the second vehicle. For the second vehicle, both the first subscription of the second vehicle and the second subscription of the second vehicle may be associated with the network node (e.g., gNodeB or eNodeB).

In some aspects, the first vehicle may lose V2X SIB or reconfiguration information for the first subscription, since the first subscription may be subjected to the OOS/RLF. In this case, the first vehicle may determine a V2X SIB or reconfiguration information for the second subscription. The first vehicle may assume that the V2X SIB or reconfiguration information for the first subscription corresponds to the V2X SIB or reconfiguration information for the second subscription. The first vehicle may perform a V2X transmission for the first subscription, to the second vehicle and/or the first network node, using the V2X SIB or reconfiguration information for the second subscription. The first vehicle may perform the V2X transmission using the V2X SIB or reconfiguration information for the second subscription, even though the V2X transmission is not attached to the second subscription. The V2X SIB or reconfiguration information for the second subscription may indicate sidelink resource pools and other information that enables the first vehicle to perform the V2X transmission for the first subscription. As a result, the first vehicle may perform the V2X transmission based at least in part on sidelink pool resource sharing between subscriptions when the first vehicle operates in a multi-SIM mode.

As indicated above, Fig. 7 is provided as an example. Other examples may differ from what is described with regard to Fig. 7.

Fig. 8 is a diagram illustrating an example process 800 performed, for example, by a first device, in accordance with the present disclosure. Example process 800 is an example where the first device (e.g., UE 120a) performs operations associated with performing a transmission of a first subscription using information of a second subscription.

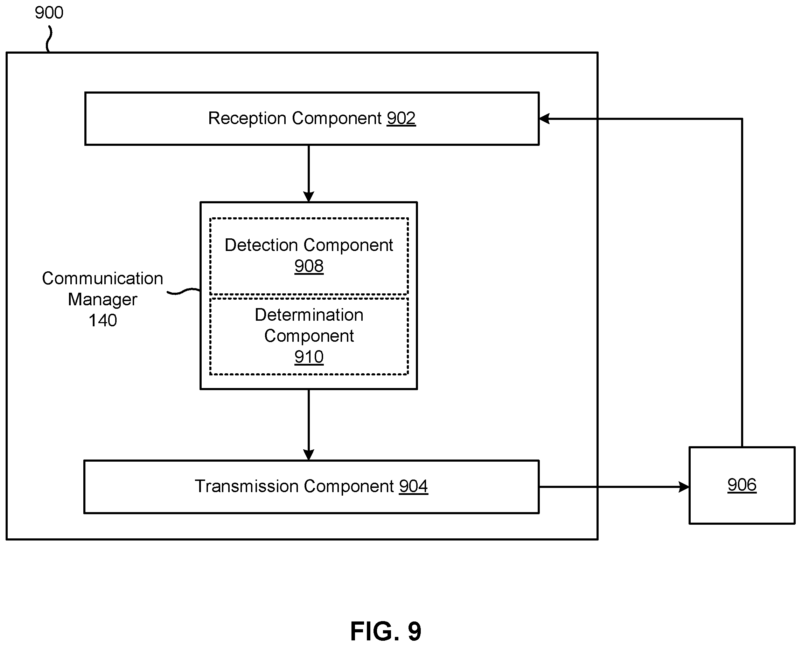

As shown in Fig. 8, in some aspects, process 800 may include detecting that a V2X SIB or reconfiguration information is unavailable based at least in part on a first subscription of the first device satisfying a condition (block 810). For example, the first device (e.g., using communication manager 140 and/or detection component 908, depicted in Fig. 9) may detect that a V2X SIB or reconfiguration information is unavailable based at least in part on a first subscription of the first device satisfying a condition, as described above.

As further shown in Fig. 8, in some aspects, process 800 may include determining the V2X SIB or reconfiguration information associated with the first subscription based at least in part on V2X SIB or reconfiguration information associated with a second subscription of the first device (block 820). For example, the first device (e.g., using communication manager 140 and/or determination component 910, depicted in Fig. 9) may determine the V2X SIB or reconfiguration information associated with the first subscription based at least in part on V2X SIB or reconfiguration information associated with a second subscription of the first device, as described above.

As further shown in Fig. 8, in some aspects, process 800 may include performing, to one or more of a network node or a second device and using the first subscription, a V2X transmission using the V2X SIB or reconfiguration information associated with the second subscription (block 830). For example, the first device (e.g., using communication manager 140 and/or transmission component 904, depicted in Fig. 9) may perform, to one or more of a network node or a second device and using the first subscription, a V2X transmission using the V2X SIB or reconfiguration information associated with the second subscription, as described above.

Process 800 may include additional aspects, such as any single aspect or any combination of aspects described below and/or in connection with one or more other processes described elsewhere herein.

In a first aspect, the first subscription associated with the first device satisfies the condition based at least in part on the first subscription being associated with one of a GSM RAT, a WCDMA RAT, or a TD-SCDMA RAT, and the second subscription is associated with an LTE RAT or an NR RAT.

In a second aspect, alone or in combination with the first aspect, the first subscription associated with the first device satisfies the condition based at least in part on the first subscription being associated with an LTE RAT or an NR RAT, and based at least in part on an OOS or an RLF associated with the first subscription, and the second subscription is associated with the LTE RAT or the NG RAT.

In a third aspect, alone or in combination with one or more of the first and second aspects, the V2X transmission is associated with the first subscription, and the V2X transmission is not associated with the second subscription.

In a fourth aspect, alone or in combination with one or more of the first through third aspects, the V2X SIB is a V2X SIB21 and SIB26 in an idle mode.

In a fifth aspect, alone or in combination with one or more of the first through fourth aspects, the first subscription is a high capability subscription, and the second subscription is a common capability subscription.

In a sixth aspect, alone or in combination with one or more of the first through fifth aspects, the first device is associated with a dual SIM mode, wherein a first SIM is associated with the first subscription and a second SIM is associated with the second subscription.

In a seventh aspect, alone or in combination with one or more of the first through sixth aspects, process 800 includes performing the V2X transmission, using the first subscription, based at least in part on sidelink pool resources indicated in the V2X SIB or reconfiguration information associated with the second subscription.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram of an example apparatus 900 for wireless communication. The apparatus 900 may be a first device, or a first device may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904. As further shown, the apparatus 900 may include the communication manager 140. The communication manager 140 may include one or more of a detection component 908, or a determination component 910, among other examples.

In some aspects, the apparatus 900 may be configured to perform one or more operations described herein in connection with Figs. 5-7. Additionally, or alternatively, the apparatus 900 may be configured to perform one or more processes described herein, such as process 800 of Fig. 8. In some aspects, the apparatus 900 and/or one or more components shown in Fig. 9 may include one or more components of the first device described in connection with Fig. 2. Additionally, or alternatively, one or more components shown in Fig. 9 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 900. In some aspects, the reception component 902 may include one or more antennas, a modem, a demodulator, a MIMO detector, a receive processor, a controller/processor, a memory, or a combination thereof, of the first device described in connection with Fig. 2.

The transmission component 904 may transmit communications, such as reference signals, control information, data communications, or a combination thereof, to the apparatus 906. In some aspects, one or more other components of the apparatus 900 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modem, a modulator, a transmit MIMO processor, a transmit processor, a controller/processor, a memory, or a combination thereof, of the first device described in connection with Fig. 2. In some aspects, the transmission component 904 may be co-located with the reception component 902 in a transceiver.

The detection component 908 may detect that a V2X SIB or reconfiguration information is unavailable based at least in part on a first subscription of the first device satisfying a condition. The determination component 910 may determine the V2X SIB or reconfiguration information associated with the first subscription based at least in part on V2X SIB or reconfiguration information associated with a second subscription of the first device. The transmission component 904 may perform, to one or more of a network node or a second device and using the first subscription, a V2X transmission using the V2X SIB or reconfiguration information associated with the second subscription.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

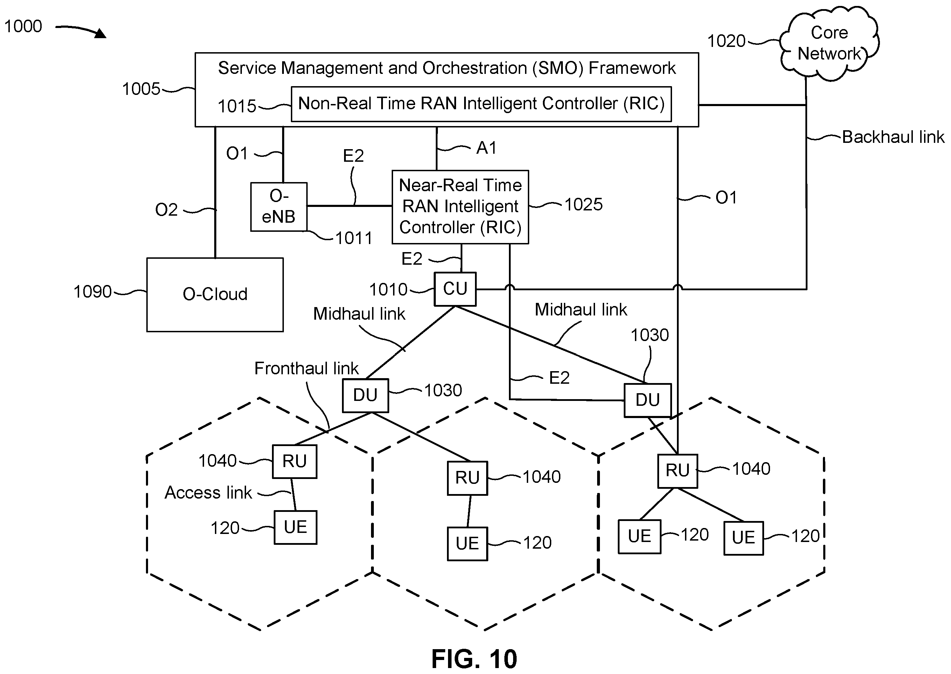

Fig. 10 is a diagram illustrating an example 1000 of a disaggregated base station architecture, in accordance with the present disclosure.

Deployment of communication systems, such as 5G NR systems, may be arranged in multiple manners with various components or constituent parts. In a 5G NR system, or network, a network node, a network entity, a mobility element of a network, a RAN node, a core network node, a network element, or a network equipment, such as a base station (BS, e.g., base station 110), or one or more units (or one or more components) performing base station functionality, may be implemented in an aggregated or disaggregated architecture. For example, a BS (such as a Node B (NB), eNB, NR BS, 5G NB, access point (AP), a TRP, a cell, or the like) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more CUs, one or more DUs, or one or more RUs). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual centralized unit (VCU), a virtual distributed unit (VDU), or a virtual radio unit (VRU).

Base station-type operation or network design may consider aggregation characteristics of base station functionality. For example, disaggregated base stations may be utilized in an IAB network, an O-RAN (such as the network configuration sponsored by the O-RAN Alliance), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

The disaggregated base station architecture shown in Fig. 10 may include one or more CUs 1010 that can communicate directly with a core network 1020 via a backhaul link, or indirectly with the core network 1020 through one or more disaggregated base station units (such as a Near-RT RIC 1025 via an E2 link, or a Non-RT RIC 1015 associated with a Service Management and Orchestration (SMO) Framework 1005, or both). A CU 1010 may communicate with one or more DUs 1030 via respective midhaul links, such as an F1 interface. The DUs 1030 may communicate with one or more RUs 1040 via respective fronthaul links. The RUs 1040 may communicate with respective UEs 120 via one or more radio frequency (RF) access links. In some implementations, the UE 120 may be simultaneously served by multiple RUs 1040.

Each of the units (e.g., the CUs 1010, the DUs 1030, the RUs 1040), as well as the Near-RT RICs 1025, the Non-RT RICs 1015, and the SMO Framework 1005, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as an RF transceiver), configured to receive or transmit signals, or both, over a wireless transmission medium to one or more of the other units.

In some aspects, the CU 1010 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 1010. The CU 1010 may be configured to handle user plane functionality (e.g., Central Unit - User Plane (CU-UP)), control plane functionality (e.g., Central Unit - Control Plane (CU-CP)), or a combination thereof. In some implementations, the CU 1010 can be logically split into one or more CU-UP units and one or more CU-CP units. The CU-UP unit can communicate bidirectionally with the CU-CP unit via an interface, such as the E1 interface when implemented in an O-RAN configuration. The CU 1010 can be implemented to communicate with the DU 1030, as necessary, for network control and signaling.

The DU 1030 may correspond to a logical unit that includes one or more base station functions to control the operation of one or more RUs 1040. In some aspects, the DU 1030 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3GPP. In some aspects, the DU 1030 may further host one or more low-PHY layers. Each layer (or module) can be implemented with an interface configured to communicate signals with other layers (and modules) hosted by the DU 1030, or with the control functions hosted by the CU 1010.

Lower-layer functionality can be implemented by one or more RUs 1040. In some deployments, an RU 1040, controlled by a DU 1030, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 1040 can be implemented to handle over the air (OTA) communication with one or more UEs 120. In some implementations, real-time and non-real-time aspects of control and user plane communication with the RU(s) 1040 can be controlled by the corresponding DU 1030. In some scenarios, this configuration can enable the DU(s) 1030 and the CU 1010 to be implemented in a cloud-based RAN architecture, such as a vRAN architecture.

The SMO Framework 1005 may be configured to support RAN deployment and provisioning of non-virtualized and virtualized network elements. For non-virtualized network elements, the SMO Framework 1005 may be configured to support the deployment of dedicated physical resources for RAN coverage requirements which may be managed via an operations and maintenance interface (such as an O1 interface). For virtualized network elements, the SMO Framework 1005 may be configured to interact with a cloud computing platform (such as an open cloud (O-Cloud) 1090) to perform network element life cycle management (such as to instantiate virtualized network elements) via a cloud computing platform interface (such as an O2 interface). Such virtualized network elements can include, but are not limited to, CUs 1010, DUs 1030, RUs 1040 and Near-RT RICs 1025. In some implementations, the SMO Framework 1005 can communicate with a hardware aspect of a 4G RAN, such as an open eNB (O-eNB) 1011, via an O1 interface. Additionally, in some implementations, the SMO Framework 1005 can communicate directly with one or more RUs 1040 via an O1 interface. The SMO Framework 1005 also may include a Non-RT RIC 1015 configured to support functionality of the SMO Framework 1005.

The Non-RT RIC 1015 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 1025. The Non-RT RIC 1015 may be coupled to or communicate with (such as via an A1 interface) the Near-RT RIC 1025. The Near-RT RIC 1025 may be configured to include a logical function that enables near-real-time control and optimization of RAN elements and resources via data collection and actions over an interface (such as via an E2 interface) connecting one or more CUs 1010, one or more DUs 1030, or both, as well as an O-eNB, with the Near-RT RIC 1025.

In some implementations, to generate AI/ML models to be deployed in the Near-RT RIC 1025, the Non-RT RIC 1015 may receive parameters or external enrichment information from external servers. Such information may be utilized by the Near-RT RIC 1025 and may be received at the SMO Framework 1005 or the Non-RT RIC 1015 from non-network data sources or from network functions. In some examples, the Non-RT RIC 1015 or the Near-RT RIC 1025 may be configured to tune RAN behavior or performance. For example, the Non-RT RIC 1015 may monitor long-term trends and patterns for performance and employ AI/ML models to perform corrective actions through the SMO Framework 1005 (such as reconfiguration via O1) or via creation of RAN management policies (such as A1 policies).

As indicated above, Fig. 10 is provided as an example. Other examples may differ from what is described with regard to Fig. 10.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus for wireless communication at a first device, comprising:
a memory; and
one or more processors, coupled to the memory, configured to:
detect that a vehicle-to-everything, V2X, system information block, SIB, or reconfiguration information is unavailable based at least in part on a first subscription of the first device satisfying a condition;
determine the V2X SIB or reconfiguration information associated with the first subscription based at least in part on V2X SIB or reconfiguration information associated with a second subscription of the first device; and
perform, to one or more of a network node or a second device and using the first subscription, a V2X transmission using the V2X SIB or reconfiguration information associated with the second subscription.

2. The apparatus of claim 1, wherein the first subscription associated with the first device satisfies the condition based at least in part on the first subscription being associated with one of: a Global System for Mobile Communications radio access technology, RAT, a Wideband Code Division Multiple Access RAT, or a Time Division Synchronous Code Division Multiple Access RAT, and wherein the second subscription is associated with a Long Term Evolution RAT or a Next Generation RAT.

3. The apparatus of claim 1, wherein the first subscription associated with the first device satisfies the condition based at least in part on the first subscription being associated with a Long Term Evolution RAT or a Next Generation RAT, and based at least in part on an out-of-service or a radio link failure associated with the first subscription, and wherein the second subscription is associated with the Long Term Evolution RAT or the Next Generation RAT.

4. The apparatus of claim 1, wherein the V2X transmission is associated with the first subscription, and the V2X transmission is not associated with the second subscription.

5. The apparatus of claim 1, wherein the V2X SIB is a V2X SIB21 and SIB26 in an idle mode.

6. The apparatus of claim 1, wherein the first subscription is a high capability subscription and the second subscription is a common capability subscription.

7. The apparatus of claim 1, wherein the first device is associated with a dual subscriber identification module, SIM, mode, wherein a first SIM is associated with the first subscription and a second SIM is associated with the second subscription.

8. The apparatus of claim 1, wherein the one or more processors, to perform the V2X transmission, are configured to perform the V2X transmission, using the first subscription, based at least in part on sidelink pool resources indicated in the V2X SIB or reconfiguration information associated with the second subscription.

9. A method (800) of wireless communication performed by a first device, comprising:
detecting (810) that a vehicle-to-everything, V2X, system information block, SIB, or reconfiguration information is unavailable based at least in part on a first subscription of the first device satisfying a condition;
determining (820) the V2X SIB or reconfiguration information associated with the first subscription based at least in part on V2X SIB or reconfiguration information associated with a second subscription of the first device; and
performing (830), to one or more of a network node or a second device and using the first subscription, a V2X transmission using the V2X SIB or reconfiguration information associated with the second subscription.

10. The method of claim 9, wherein the first subscription associated with the first device satisfies the condition based at least in part on the first subscription being associated with one of: a Global System for Mobile Communications radio access technology, RAT, a Wideband Code Division Multiple Access RAT, or a Time Division Synchronous Code Division Multiple Access RAT, and wherein the second subscription is associated with a Long Term Evolution RAT or a Next Generation RAT.

11. The method of claim 9, wherein the first subscription associated with the first device satisfies the condition based at least in part on the first subscription being associated with a Long Term Evolution RAT or a Next Generation RAT, and based at least in part on an out-of-service or a radio link failure associated with the first subscription, and wherein the second subscription is associated with the Long Term Evolution RAT or the Next Generation RAT.

12. The method of claim 9, wherein the V2X transmission is associated with the first subscription, and the V2X transmission is not associated with the second subscription.

13. The method of claim 9, wherein the V2X SIB is a V2X SIB21 and SIB26 in an idle mode.

14. The method of claim 9, wherein performing the V2X transmission comprises performing the V2X transmission, using the first subscription, based at least in part on sidelink pool resources indicated in the V2X SIB or reconfiguration information associated with the second subscription.

15. A non-transitory computer-readable medium storing a set of instructions for wireless communication, the set of instructions comprising:
one or more instructions that, when executed by one or more processors of a first device, cause the first device to:
detect that a vehicle-to-everything, V2X, system information block, SIB, or reconfiguration information is unavailable based at least in part on a first subscription of the first device satisfying a condition;
determine the V2X SIB or reconfiguration information associated with the first subscription based at least in part on V2X SIB or reconfiguration information associated with a second subscription of the first device; and
perform, to one or more of a network node or a second device and using the first subscription, a V2X transmission using the V2X SIB or reconfiguration information associated with the second subscription.

## Patentansprüche

1. Eine Vorrichtung für eine drahtlose Kommunikation an einem ersten Gerät, aufweisend:
einen Speicher, und
einen oder mehrere Prozessoren, die mit dem Speicher gekoppelt sind und konfiguriert sind zum:
Erfassen, dass V2X (Vehicle-to-Everything)-Systeminformationsblock (SIB) oder Rekonfiguration-Informationen nicht verfügbar sind, basierend wenigstens teilweise darauf, dass ein erstes Abonnement des ersten Geräts eine Bedingung erfüllt,
Bestimmen der mit dem ersten Abonnement assoziierten V2X-SIB oder Rekonfiguration-Informationen basierend wenigstens teilweise auf V2X-SIB oder Rekonfiguration-Informationen, die mit einem zweiten Abonnement des ersten Geräts assoziiert sind, und
Durchführen, für einen Netzknoten und/oder ein zweites Gerät und unter Verwendung des ersten Abonnements, einer V2X-Sendung unter Verwendung der V2X-SIB oder Rekonfiguration-Informationen, die mit dem zweiten Abonnement assoziiert sind.

2. Vorrichtung nach Anspruch 1, wobei das mit dem ersten Gerät assoziierte erste Abonnement die Bedingung erfüllt basierend wenigstens teilweise darauf, dass das erste Abonnement mit einer GSM (Global System for Mobile Communication)-Funkzugangstechnologie (Radio Access Technology bzw. RAT), einer WCDMA (Wideband Code Division Multiple Access)-RAT oder einer TD-SCDMA (Time Division Synchronous Code Division Multiple Access)-RAT assoziiert ist und wobei das zweite Abonnement mit einer LTE (Long Term Evolution)-RAT oder einer NG (Next Generation)-RAT assoziiert ist.

3. Vorrichtung nach Anspruch 1, wobei das mit dem ersten Gerät assoziierte erste Abonnement die Bedingung erfüllt basierend wenigstens teilweise darauf, dass das erste Abonnement mit einer LTE (Long Term Evolution)-RAT oder einer NG (Next Generation)-RAT assoziiert ist, und basierend wenigstens teilweise auf einem mit dem ersten Abonnement assoziierten Betriebsausfall oder Funkverbindungsfehler, und wobei das zweite Abonnement mit der LTE-RAT oder der NG-RAT assoziiert ist.

4. Vorrichtung nach Anspruch 1, wobei die V2X-Sendung mit dem ersten Abonnement assoziiert ist und die V2X-Sendung nicht mit dem zweiten Abonnement assoziiert ist.

5. Vorrichtung nach Anspruch 1, wobei der V2X-SIB ein V2X-SIB21 und SIB26 in einem Ruhemodus ist.

6. Vorrichtung nach Anspruch 1, wobei das erste Abonnement ein Abonnement mit einer hohen Fähigkeit ist und das zweite Abonnement ein Abonnement mit einer gewöhnlichen Fähigkeit ist.

7. Vorrichtung nach Anspruch 1, wobei das erste Gerät mit einem Dual-SIM (Subscriber Identity Module)-Modus assoziiert ist, wobei ein erstes SIM mit dem ersten Abonnement assoziiert ist und ein zweites SIM mit dem zweiten Abonnement assoziiert ist.

8. Vorrichtung nach Anspruch 1, wobei der eine oder die mehreren Prozessoren für das Durchführen der V2X-Sendung konfiguriert sind zum Durchführen der V2X-Sendung unter Verwendung des ersten Abonnements basierend wenigstens teilweise auf Sidelink-Pool-Ressourcen, die in den mit dem zweiten Abonnement assoziierten V2X-SIB oder Rekonfiguration-Informationen angegeben werden.

9. Ein Verfahren (800) für eine drahtlose Kommunikation, das durch ein erstes Gerät durchgeführt wird, aufweisend:
Erfassen (810), dass V2X (Vehicle-to-Everything)-Systeminformationsblock (SIB) oder Rekonfiguration-Informationen nicht verfügbar sind, basierend wenigstens teilweise darauf, dass ein erstes Abonnement des ersten Geräts eine Bedingung erfüllt,
Bestimmen (820) der mit dem ersten Abonnement assoziierten V2X-SIB oder Rekonfiguration-Informationen basierend wenigstens teilweise auf V2X-SIB oder Rekonfiguration-Informationen, die mit einem zweiten Abonnement des ersten Geräts assoziiert sind, und
Durchführen (830), für einen Netzknoten und/oder ein zweites Gerät und unter Verwendung des ersten Abonnements, einer V2X-Sendung unter Verwendung der V2X-SIB oder Rekonfiguration-Informationen, die mit dem zweiten Abonnement assoziiert sind.

10. Verfahren nach Anspruch 9, wobei das mit dem ersten Gerät assoziierte erste Abonnement die Bedingung erfüllt basierend wenigstens teilweise darauf, dass das erste Abonnement mit einer GSM (Global System for Mobile Communication)-Funkzugangstechnologie (Radio Access Technology bzw. RAT), einer WCDMA (Wideband Code Division Multiple Access)-RAT oder einer TD-SCDMA (Time Division Synchronous Code Division Multiple Access)-RAT assoziiert ist und wobei das zweite Abonnement mit einer LTE (Long Term Evolution)-RAT oder einer NG (Next Generation)-RAT assoziiert ist.

11. Verfahren nach Anspruch 9, wobei das mit dem ersten Gerät assoziierte erste Abonnement die Bedingung erfüllt basierend wenigstens teilweise darauf, dass das erste Abonnement mit einer LTE (Long Term Evolution)-RAT oder einer NG (Next Generation)-RAT assoziiert ist, und basierend wenigstens teilweise auf einem mit dem ersten Abonnement assoziierten Betriebsausfall oder Funkverbindungsfehler, und wobei das zweite Abonnement mit der LTE-RAT oder der NG-RAT assoziiert ist.

12. Verfahren nach Anspruch 9, wobei die V2X-Sendung mit dem ersten Abonnement assoziiert ist und die V2X-Sendung nicht mit dem zweiten Abonnement assoziiert ist.

13. Verfahren nach Anspruch 9, wobei der V2X-SIB ein V2X-SIB21 und SIB26 in einem Ruhemodus ist.

14. Verfahren nach Anspruch 9, wobei das Durchführen der V2X-Sendung das Durchführen der V2X-Sendung unter Verwendung des ersten Abonnements basierend wenigstens teilweise auf Sidelink-Pool-Ressourcen, die in den mit dem zweiten Abonnement assoziierten V2X-SIB oder Rekonfiguration-Informationen angegeben werden, aufweist.

15. Ein nicht-transitorisches, computerlesbares Medium, das einen Satz von Befehlen für eine drahtlose Kommunikation speichert, wobei der Satz von Befehlen aufweist:
einen oder mehrere Befehle, die bei einer Ausführung durch einen oder mehrere Prozessoren eines ersten Geräts das erste Gerät veranlassen zum:
Erfassen, dass V2X (Vehicle-to-Everything)-Systeminformationsblock (SIB) oder Rekonfiguration-Informationen nicht verfügbar sind, basierend wenigstens teilweise darauf, dass ein erstes Abonnement des ersten Geräts eine Bedingung erfüllt,
Bestimmen der mit dem ersten Abonnement assoziierten V2X-SIB oder Rekonfiguration-Informationen basierend wenigstens teilweise auf V2X-SIB oder Rekonfiguration-Informationen, die mit einem zweiten Abonnement des ersten Geräts assoziiert sind, und
Durchführen, für einen Netzknoten und/oder ein zweites Gerät und unter Verwendung des ersten Abonnements, einer V2X-Sendung unter Verwendung der V2X-SIB oder Rekonfiguration-Informationen, die mit dem zweiten Abonnement assoziiert sind.

## Revendications

1. Appareil de communication sans fil au niveau d'un premier dispositif, comprenant :
une mémoire ; et
un ou plusieurs processeurs, couplés à la mémoire, configurés pour :
détecter qu'un bloc d'informations de système, SIB, véhicule-à-tout, V2X, ou que des informations de reconfiguration ne sont pas disponibles, sur la base, au moins en partie, du fait qu'un premier abonnement du premier dispositif satisfait à une condition ;
déterminer le SIB V2X ou les informations de reconfiguration associées au premier abonnement sur la base, au moins en partie, du fait que le SIB V2X ou que les informations de reconfiguration sont associés à un second abonnement du premier dispositif ; et
réaliser, vers un nœud de réseau et/ou un second dispositif et au moyen du premier abonnement, une émission V2X au moyen du SIB V2X ou des informations de reconfiguration associés au second abonnement.

2. Appareil selon la revendication 1, le premier abonnement associé au premier dispositif satisfaisant à la condition sur la base, au moins en partie, du fait que le premier abonnement est associé à l'une des technologies suivantes : une technologie d'accès radio, RAT, d'un système mondial de communications mobiles, une RAT à accès multiple par répartition en code à large bande et une RAT à accès multiple par répartition dans le temps-répartition en code synchrone, et le second abonnement étant associé à une RAT à évolution à long terme ou à une RAT de nouvelle génération.

3. Appareil selon la revendication 1, le premier abonnement associé au premier dispositif satisfaisant à la condition sur la base, au moins en partie, du fait que le premier abonnement est associé à une RAT à évolution à long terme ou à une RAT de nouvelle génération, et sur la base, au moins en partie, d'une panne de service ou d'une défaillance de liaison radio associée au premier abonnement, et le second abonnement étant associé à la RAT à évolution à long terme ou à la RAT de nouvelle génération.

4. Appareil selon la revendication 1, l'émission V2X étant associée au premier abonnement, et l'émission V2X n'étant pas associée au second abonnement.

5. Appareil selon la revendication 1, le SIB V2X étant un SIB21 et un SIB26 V2X en mode veille.

6. Appareil selon la revendication 1, le premier abonnement étant un abonnement à haute capacité et le second abonnement étant un abonnement à capacité commune.

7. Appareil selon la revendication 1, le premier dispositif étant associé à un mode à double module d'identification d'abonné, SIM, un premier SIM étant associé au premier abonnement et un second SIM étant associé au second abonnement.

8. Appareil selon la revendication 1, les un ou plusieurs processeurs, pour réaliser l'émission V2X, étant configurés pour réaliser l'émission V2X au moyen du premier abonnement, sur la base, au moins en partie, de ressources regroupées en liaison latérale indiquées dans le SIB V2X ou les informations de reconfiguration associées au second abonnement.

9. Procédé (800) de communication sans fil réalisé par un premier dispositif, comprenant les étapes consistant à :
détecter (810) qu'un bloc d'informations de système, SIB, véhicule-à-tout, V2X, ou que des informations de reconfiguration ne sont pas disponibles, sur la base, au moins en partie, du fait qu'un premier abonnement du premier dispositif satisfait à une condition ;
déterminer (820) le SIB V2X ou les informations de reconfiguration associées au premier abonnement sur la base, au moins en partie, du fait que le SIB V2X ou que les informations de reconfiguration sont associés à un second abonnement du premier dispositif ; et
réaliser (830), vers un nœud de réseau et/ou un second dispositif et au moyen du premier abonnement, une émission V2X au moyen du SIB V2X ou des informations de reconfiguration associés au second abonnement.

10. Procédé selon la revendication 9, le premier abonnement associé au premier dispositif satisfaisant à la condition sur la base, au moins en partie, du fait que le premier abonnement est associé à l'une des technologies suivantes : une technologie d'accès radio, RAT, d'un système mondial de communications mobiles, une RAT à accès multiple par répartition en code à large bande et une RAT à accès multiple par répartition dans le temps-répartition en code synchrone, et le second abonnement étant associé à une RAT à évolution à long terme ou à une RAT de nouvelle génération.

11. Procédé selon la revendication 9, le premier abonnement associé au premier dispositif satisfaisant à la condition sur la base, au moins en partie, du fait que le premier abonnement est associé à une RAT à évolution à long terme ou à une RAT de nouvelle génération, et sur la base, au moins en partie, d'une panne de service ou d'une défaillance de liaison radio associée au premier abonnement, et le second abonnement étant associé à la RAT à évolution à long terme ou à la RAT de nouvelle génération.

12. Procédé selon la revendication 9, l'émission V2X étant associée au premier abonnement, et l'émission V2X n'étant pas associée au second abonnement.

13. Procédé selon la revendication 9, le SIB V2X étant un SIB21 et un SIB26 V2X en mode veille.

14. Procédé selon la revendication 9, la réalisation de l'émission V2X comprenant l'étape consistant à réaliser l'émission V2X au moyen du premier abonnement, sur la base, au moins en partie, de ressources regroupées en liaison latérale indiquées dans le SIB V2X ou les informations de reconfiguration associées au second abonnement.

15. Support non transitoire lisible par ordinateur, stockant un ensemble d'instructions pour une communication sans fil, l'ensemble d'instructions comprenant :
une ou plusieurs instructions qui, lorsqu'elles sont exécutées par un ou plusieurs processeurs d'un premier dispositif, amènent le premier dispositif à :
détecter qu'un bloc d'informations de système, SIB, véhicule-à-tout, V2X, ou que des informations de reconfiguration ne sont pas disponibles, sur la base, au moins en partie, du fait qu'un premier abonnement du premier dispositif satisfait à une condition ;
déterminer le SIB V2X ou les informations de reconfiguration associées au premier abonnement sur la base, au moins en partie, du fait que le SIB V2X ou que les informations de reconfiguration sont associés à un second abonnement du premier dispositif ; et
réaliser, vers un nœud de réseau et/ou un second dispositif et au moyen du premier abonnement, une émission V2X au moyen du SIB V2X ou des informations de reconfiguration associés au second abonnement.
